Europäisches Patentamt

(19) European Patent Office

Office européen des brevets

(11) Publication number: **0 014 542**
**B1**

(12) **EUROPEAN PATENT SPECIFICATION**

(45) Date of publication of patent specification: **04.07.84**  (51) Int. Cl.³: **B 60 C  9/20**

(21) Application number: **80300223.7**

(22) Date of filing: **24.01.80**

(54) Tyres for trucks and buses.

<table>
<tr><td>

(30) Priority: **31.01.79 JP  10614/79**

(43) Date of publication of application:
**20.08.80 Bulletin 80/17**

(45) Publication of the grant of the patent:
**04.07.84 Bulletin 84/27**

(84) Designated Contracting States:
**DE FR GB IT**

(56) References cited:
**DE - B - 1 145 507**
**FR - A - 1 001 585**
**FR - A - 1 166 794**
**FR - A - 1 207 118**
**FR - A - 1 275 020**

</td><td>

(73) Proprietor: **SUMITOMO RUBBER INDUSTRIES LIMITED**
**No. 1-1, Tsutsui-cho 1-chome**
**Fukiai-ku Kobe-shi Hyogo (JP)**

(72) Inventor: **Iuchi, Munenori**
**No. 12, Aza Honen**
**Shirakawa-shi, Fukushima (JP)**

(74) Representative: **Mosey, Stephen George et al,**
**Marks & Clerk Alpha Tower Suffolk Street**
**Queensway**
**Birmingham B1 1TT (GB)**

</td></tr>
</table>

Courier Press, Leamington Spa, England.

## 0 014 542

**Description**

This invention relates to an improvement in the structure of a tyre for trucks and buses which is adapted for use on bad roads, and particularly to an improvement in the structure of a breaker composed of multiple layers of steel cord belts.

Various improvements have been made in truck and bus tyres for use on bad roads and resulted in a considerable upgrading in quality, for example, durability. But these improvements are still not entirely satisfactory to the users.

In particular, tyres used to drive wheels of trucks and buses tend to undergo cutting at their tread surfaces. When cutting results, delamination occurs at the cut portions between the rubber and the steel cords of belts constituting the breaker or between the rubber portions near the steel cords. The delamination grows in the equatorial direction of the tyre, and finally, the tread portion is torn off from the tyre in masses.

A tyre of known kind and suitable for replacement tread fitting is shown and described in German Patent Specification DE—A—1145507. This has multiple layers of strengthening belts made of steel cords.

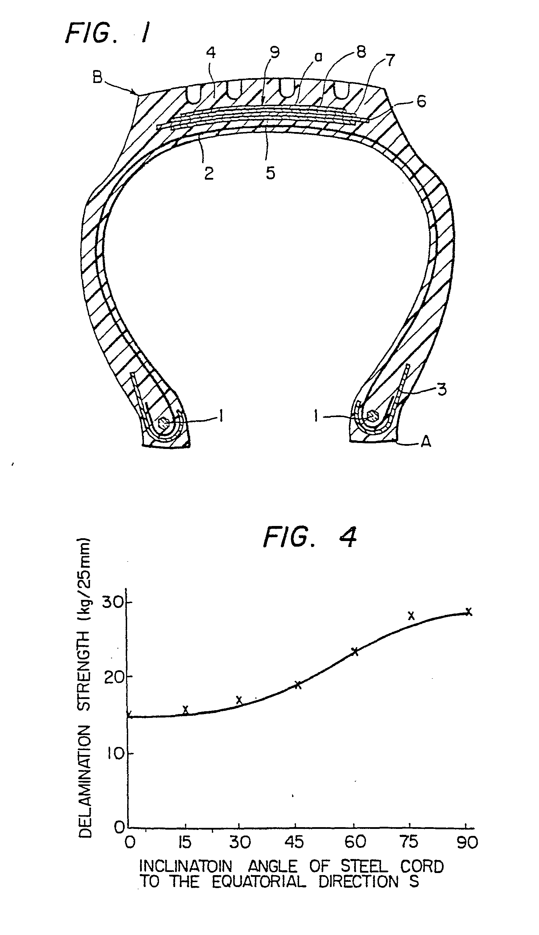

A tyre of this kind for use on bad roads, which now gains widespread use, is of the structure shown in Figure 1 of the accompanying drawings, in which at least one carcass ply 2 is arranged in the radial direction or semi-radial direction with its terminal portions folded back along bead cores 1. A bead portion A is reinforced with bead reinforcing members 3, and a crown portion B, having a tread 4 formed on its outer peripheral surface, includes a breaker 9 composed of, for example, four laminated layers of belts 5, 6, 7 and 8, made of steel cords *a*, in the circumferential direction.

Generally, there have previously been employed two structures of breaker 9 of a tyre of this kind, as shown in Tables 1 and 2.

TABLE 1

| Sequence of layers from the carcass ply | Angle of inclination of cords to the equatorial direction | Direction of the angle | Remarks |
|---|---|---|---|
| 1st layer (5) | 50—80° | Rising rightward | Optionally divided into two at the center |
| 2nd layer (6) | 10—30° | Rising rightward | |
| 3rd layer (7) | 10—30° | Rising leftward | |
| 4th layer (8) | 10—30° | Rising leftward | Optionally not used |

Note: As regards the direction of the angle, if the 2nd layer and the 3rd layer cross each other, the directions of the 1st layer and the 4th layer are optional.

2

TABLE 2

| Sequence of layers from the carcass ply | Angle of inclination of cords to the equatorial direction | Direction of the angle | Remarks |
|---|---|---|---|
| 1st layer (5) | 10—30° | Rising rightward | |
| 2nd layer (6) | 10—30° | Rising leftward | |
| 3rd layer (7) | 10—30° | Rising rightward | |
| 4th layer (8) | 10—30° | Rising leftward | Optionally not used |

NOTE: Any one layer should cross an adjacent layer. There is no other restriction on the direction of the layers.

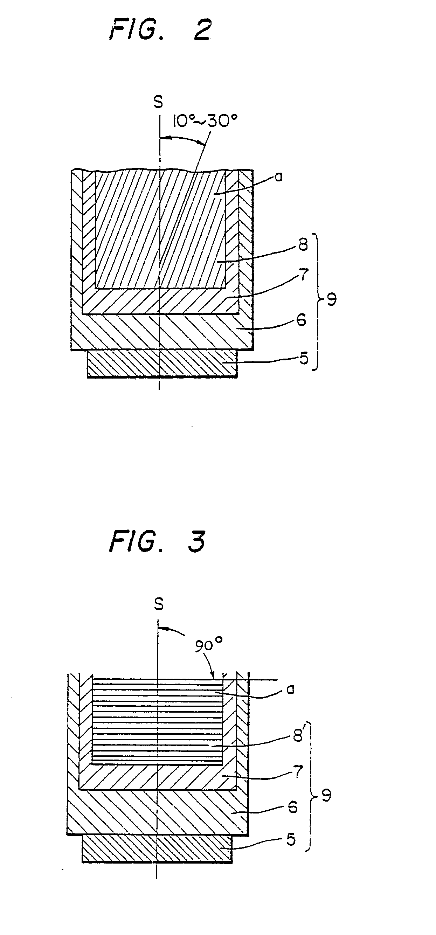

As is seen from Tables 1 and 2, in the conventional belt structures, the fourth layer 8 (third layer 7 when the fourth layer 8 is not used), which constitutes the outermost layer, includes steel cords which are arranged at a relatively small angle of 10 to 30° to the equatorial direction S, and each steel cord *a* is very long with respect to the equatorial direction S of the tyre, as shown in Figure 2. For this reason, in the event that the tread 4 of the tyre is partly cut by some cause, the outermost layer belt 8 will become a cause of inducing the occurrence and growth of delamination, as described hereinabove. Specifically, water coming from the cuts causes rusting of the outermost layer 8 (or 7) at the cuts. The rust advances along the steel cords *a*. Since the steel cords *a* are inclined only slightly to the equatorial direction S, the rust advances substantially along the equatorial direction S of the tyre. Once the steel cords *a* get rusty, the adhesion strength between the cords and the rubber contacting them is reduced drastically and consequently, the delamination strength is reduced.

When a large shear stress in the equatorial direction S acts on the tread portion 4 of the tyre with the driving of a wheel, the shear stress acts as a delamination force between the tread portion 4 and the outermost belt layer 8 (7), and consequently, the rust steel cords *a* separate from the surrounding rubber. This delamination proceeds in the equatorial directions along the rusty steel cords *a*. Finally, the delamination will proceed to get together between the cuts to cause complete delamination between the outermost layer belt 8 and the tread portion 4 and to tear off the tread portion 4.

It is an object of this invention to solve the aforesaid problem of the prior art, and to provide a tyre for trucks and buses, which even when cut can effectively prevent delamination between steel cords and the rubber or between rubber portions which may occur as a result of cutting, and also the growth of the delamination in the equatorial direction.

According to the invention, there is provided a tyre for trucks and buses comprising at least one carcass disposed in the radial direction or the semi-radial direction, a tread portion, and formed between said carcass and said tread portion, a breaker composed of four layers of belts each composed of steel cords, characterised in that the steel cords constituting the outermost layer belt of said breaker are arranged at right angles or at substantially right angles to the equatorial direction of the tyre.

One way of carrying out the invention is described in detail below with reference to the drawings which illustrate a specific embodiment, and in which:

Figure 1 is a cross-section of a conventional tyre for trucks and buses,

Figure 2 is an overhead view showing a conventional belt layer structure of a tyre for trucks and buses,

Figure 3 is an overhead view showing the belt layer in a tyre constructed in accordance with the present inventon, and

Figure 4 is a graph showing variations in delamination strength versus the inclination angle of a steel cord of a belt to the equatorial direction.

The characteristic of this invention is that the direction of the outermost blet, i.e. the inclination angle of the steel cords in the outermost belt to the equatorail direction, is adjusted 90° or substantially 90°.

As shown in Figure 3, steel cords *a* of the outermost layer of the four belt layers 5, 6, 7 and 8' constituting the breaker 9 of the tyre, i.e. the belt 8' nearest the tread portion 4, are arranged substantially perpendicular to the equatorial direction S of the tyre. By this arrangement, the growth of rust which may be generated by water coming from cuts is restricted to the direction of the steel cords

*a*, i.e. the widthwise direction of the tyre. Consequently, the proceeding of the rust in the equatorial direction S of the tyre can be inhibited and thus the delamination between the tread portion and the outermost belt layer owing to shear stress can be prevented.

In addition to the above advantage, when the steel cords *a* of the outermost belt layer 8' are arranged substantially at right angles to the equatorial direction, the delamination strength between the steel cords *a* and the surrounding rubber can be increased outstandingly from that in the conventional structure, as is clearly seen from the relation shown in Figure 4. For example, when the angle of inclination of the steel cord *a* to the equatorial direction S is 90°, the delamination strength obtained (about 29 kg/25 mm) is about twice that (about 15 kg/25 mm) obtainable when the angle of inclination is 15°.

A conventional tyre for trucks and buses on bad roads and the tyre of this invention were comparatively tested, and the results are shown in Tables 3 and 4.

The comparative experiment performed was a general durability drum test under the following conditions on new tyres (rim: 7.50 U20) between the comparison tyre and the tyre of the invention.

Inner pressure: 7.9 bar (7.75 kg/cm²)
Load: 3,645 kg
Speed: 40 km/hour

The structure of the comparison tyre and the tyre of the invention tested is summarized in Table 3 below. The results of the test are set forth in Table 4.

TABLE 3

| Carcass ply | Invention Tyre | | | | Comparison Tyre | | | |
|---|---|---|---|---|---|---|---|---|
| (1) Number of ply | one ply | | | | one ply | | | |
| (2) Angle of inclination of cords to the equatorial direction | 90° | | | | 90° | | | |
| breaker ply (sequence of layers from the carcass ply) | 1st layer | 2nd layer | 3rd layer | 4th layer | 1st layer | 2nd layer | 3rd layer | 4th layer |
| (1) Angle of inclination of cords to the equatorial direction | 67° | 16° | 16° | 90° | 67° | 16° | 16° | 16° |
| (2) Direction of the angle* | RH | RH | LH | LH | RH | RH | LH | LH |
| (3) Width of breaker (mm) | 146 | 162 | 144 | 75 | 146 | 162 | 144 | 75 |

[Note] *: RH means "rising rightward" and LH means "rising leftward" when observing from the outside of the Tyre.

TABLE 4

| Running distance | Specification | Comparison Tyre | Invention Tyre |
|---|---|---|---|
| 0 (new tires) | Outside diameter of the tyre | 1,056 mm | 1,056 mm |
| | Width of the tyre | 278 | 278 |
| | Tread radius | 485 | 499 |
| 1,000 km | Outside diameter | 1,061 mm | 1,060 mm |
| | Width | 278 | 278 |
| | Tread radius | 451 | 504 |
| 3,000 km | Outside diameter | 1,063 mm | 1,061 mm |
| | Width | 278 | 278 |
| | Tread radius | 428 | 497 |
| 5,000 km | Outside diameter | 1,063 mm | 1,061 mm |
| | Width | 278 | 278 |
| | Tread radius | 426 | 492 |
| 9,000 km | Outside diameter | 1,063 mm | 1,061 mm |
| | Width | 278 | 278 |
| | Tread radius | 424 | 489 |

| Tyre temperature immediately after running 9,000 km | | | |
|---|---|---|---|
| | Shoulder portion | Intermediate portion | Crown portion |
| Comparison tyre | 87°C | 91°C | 93°C |
| Invention tyre | 85°C | 87°C | 88°C |

As is seen from Tables 3 and 4, the tyre of this invention changes very little in outside diameter and tread radius as compared with the conventional tyre, and shows greatly improved durability.

When cuts are caused to the tread portion of the tyre of this invention and water gets into the resulting cuts, the progress of rust which occurs in the steel cords is restricted to the widthwise direction of the tyre, and its propagation in the equatorial direction of the tyre can be minimized. Accordingly, the delamination between the tread portion and the outermost belt layer owing to the growth of the rust can be surely inhibited, and moreover, the delamination strength between the steel cords and the surrounding rubber can be increased very greatly. This brings out an effect of not only preventing delamination but also of increasing the durability of the tyre itself. Thus, the present invention can provide tyres for bad roads which can fully meet the demand of the user.

**Claim**

1. A tyre for trucks and buses comprising at least one carcass (2) disposed in the radial direction or the semi-radial direction, a tread portion (4), and formed between said carcass and said tread portion (4), a breaker (9) composed of four layers of belts (5, 6, 7, 8) each composed of steel cords, characterized in that the steel cords constituting the outermost layer belt (8') of said breaker (9) are arranged at right angles or at substantially right angles to the equatorial direction of the tyre.

5

# 0 014 542

**Revendication**

1. Pneumatique pour camions et autobus, comprenant au moins une carcasse radiale ou semi-radiale (2), une bande de roulement (4) et, entre la carcasse et la bande de roulement, une armature circonférentielle (9) composée de quatre nappes formant ceinture (5, 6, 7, 8) qui sont chacune constituées de câblés d'acier, caractérisé en ce que les câblés d'acier constituant la nappe ou ceinture extérieure (8') de l'armature (9) sont orientés sous un angle droit ou sensiblement droit avec la plan équatorial du pneumatique.

**Patentanspruch**

1. Reifen für Lastkraftwagen und Busse mit wenigstens einer in der radialen Richtung oder halbradialen Richtung angeordneten Karkasse (2), einem Laufflächenteil (4) und einem zwischen der genannten Karkasse und dem genannten Laufflächenteil ausgebildeten Kissen (9) mit vier Gürtellagen (5,6,7,8), deren jede aus Stahlkorden besteht, dadurch gekennzeichnet, daß die die äußerste Gürtellage (8') des Kissens (9) bildenden Stahlkorde unter rechten Winkeln oder unter im wesentlichen rechten Winkeln zur Äquatorrichtung des Reifens angeordnet sind.

6

## FIG. 1

## FIG. 4

DELAMINATION STRENGTH (kg/25mm)

INCLINATOIN ANGLE OF STEEL CORD
TO THE EQUATORIAL DIRECTION S

## FIG. 2

## FIG. 3